# EUROPEAN PATENT APPLICATION

(11) **EP 4 661 489 A1**
(43) Date of publication of application: **10.12.2025**
(21) Application number: 24749982.5
(22) Date of filing: 19.01.2024
(51) Int. Cl.: H04W 28/10, H04W 28/08, H04W 92/16

(54) **WIRELESS COMMUNICATION SYSTEM, PATH SWITCHING METHOD THEREFOR, AND COMPUTER READABLE RECORDING MEDIUM**

(30) Priority: 31.01.2023 JP 2023013117
(71) Applicant: KDDI Corporation, Tokyo 163-8003 (JP)
(72) Inventor: NAGAREDA, Riichiro, Tokyo 163-8003 (JP); SASAKI, Chikara, Tokyo 163-8003 (JP); TAGAMI, Atsushi, Tokyo 163-8003 (JP)
(74) Representative: Mathys & Squire
(86) International application number: PCT/JP2024/001367
(87) International publication number: WO 2024/162029

(57) **Abstract**

Each of virtualized base stations is configured by connecting respective units of CU, DU, and RUs via predetermined route, and the interfaces between the respective units are open. An ACC is installed at least a part of computers that virtualize the respective units. The respective units notify the RAN controller of ACC information of computers and traffic information. The RAN controller comprises a route calculation unit 101 that calculates an optimal route based on the ACC information and traffic information of the respective units, and a route notification unit 102 that notifies the respective units of information on the optimal route, and the respective units switch the route between the respective units based on the notified route information.

## Description

### TECHNICAL FIELD

The present invention relates to a wireless communication system and a route switching method thereof. In particular, the present invention relates to a wireless communication system that achieves load balancing by switching a connection between units of each virtualized base station according to capabilities of computers that virtualize radio base stations in a radio access network (RAN), thereby improving the processing capability and power consumption efficiency of the RAN.

### BACKGROUND ART

As the fifth-generation wireless communication system (5G) becomes more advanced, it is expected that the demand for large volume, low-latency, and multi-connection communications will further increase compared to the initial stage of its introduction.

In addition, the O-RAN Alliance is studying specifications for splitting functions of a radio base station, which were previously integrated in the RAN, into a Centralized Unit (CU) that performs session processing, a Distributed Unit (DU) that performs baseband processing, and a Radio Unit (RU) that performs radio processing, and for opening up interface specifications between respective units (NPL1).

The O-RAN Alliance is also studying specifications for a RAN controller (RIC: RAN Intelligent Controller) to control the RAN in an integrated manner. In addition, from the viewpoint of cost reduction and ease of operation, virtualized base stations that are implemented as software on general-purpose servers, especially for the CU and DU, are being considered.

On the other hand, it is assumed that the processing load of the CU and DU will increase in order to handle the increased traffic load due to the advancement of 5G. The technology to dynamically increase/reduce the number of virtualized base stations according to the processing load has been studied in PTL1.

Further, in order to handle the increased processing load on a CPU in a virtualized base station, technologies that reduce the processing load on the CPU by offloading processes of the CPU to an accelerator (ACC) such as an FPGA (Field-Programmable Gate Array: integrated circuits whose configuration can be set by purchasers or designers after manufacture) and a GPU (Graphics Processing Unit) are considered in PTL2, NPL2 and NPL3.

### CITATION LIST

### PATENT LITERATURE

PTL1: Japanese Patent Laid-Open No. 2021-523186
PTL2: Japanese Patent No. 7097340

### NON-PATENT LITERATURE

NPL1: O-RAN ALLIANCE, https://www.o-ran.org/
NPL2: Nagareda, et al., "Quantitative Evaluation regarding Power Consumption Reduction by Hardware Offloading in Virtualized Base Stations,"Shingaku Giho, vol. 122, no. 129, CQ2022-19, pp. 13-18, July 2022.
NPL3: J. C. Borromeo, et al.,"An Overview of Hardware Acceleration Techniques for 5G Functions," 2020 22nd International Conference on Transparent Optical Networks, July 2020.

### SUMMARY OF INVENTION

### TECHNICAL PROBLEM

In order to handle large volume traffic due to the advancement of 5G, it is assumed that the processing load on the CPU in the virtualized base station will increase and the CPU alone will not be able to process the traffic. According to the technology disclosed in PTL1, it possible to increase or decrease the number of virtualized base stations; however, it is difficult to distribute processes of the CPU because it does not improve the processing capabilities of the CPU.

Further, in the technology disclosed in PTL1, the ACC can be dynamically assigned to each function of the virtualized base station; however, all virtualized base stations need to contain the ACC because each function of the virtualized base station requires low latency.

In the technology disclosed in NPL2 and NPL3, it is possible to reduce the processing load of the CPU by using the ACC, which is more suitable than the CPU for arithmetic processing in the virtualized base station; however, there is a problem that the cost increases significantly when the ACC is installed in all CUs and DUs.

### SOLUTION TO PROBLEM

According to an aspect of the present disclosure, a wireless communication system, in which virtualized base stations are controlled by a RAN controller, each of the virtualized base stations is configured by connecting a central unit (CU), a distributed unit (DU) and a radio unit (RU) via a predetermined route, and interfaces between respective units are open, wherein an accelerator is installed in at least a part of computers virtualizing the respective units, and the respective units notify the RAN controller of information of an accelerator installed in a computer that virtualizes the respective units and traffic information, and wherein the RAN controller includes: means for calculating a route connecting the respective units based on the information of the accelerator and the traffic information notified from the respective units, and means for notifying the respective units of information of the route, and wherein the respective units switch routes based on the notified information of the route.

### ADVANTAGEOUS EFFECTS OF INVENTION

According to the present invention, the capabilities of units (CU, DU) virtualized by computers in which ACCs are installed among computers that virtualize radio base stations of the RAN are evaluated higher than the capabilities of the other units, and routes between respective units are switched so that a unit with higher capability can handle more traffic; therefore, efficient RAN operation is possible with minimal hardware resources.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

FIG. 1 is a functional block diagram showing a main part configuration of a radio access network (RAN) to which the present invention is applied.
FIG. 2 is a sequence flow showing an ACC information notification procedure, in which each unit of a virtual base station notifies an RIC of information on an ACC installed in a computer.
FIG. 3 is a sequence flow showing a traffic information notification procedure, in which each unit of a virtual base station periodically notifies an RIC of current traffic information.
FIG. 4 is a sequence flow showing a route switching procedure, in which an RIC calculates an optimal route between respective units and instructs the respective units to switch routes.
FIG. 5 is a functional block diagram showing an example of route switching.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

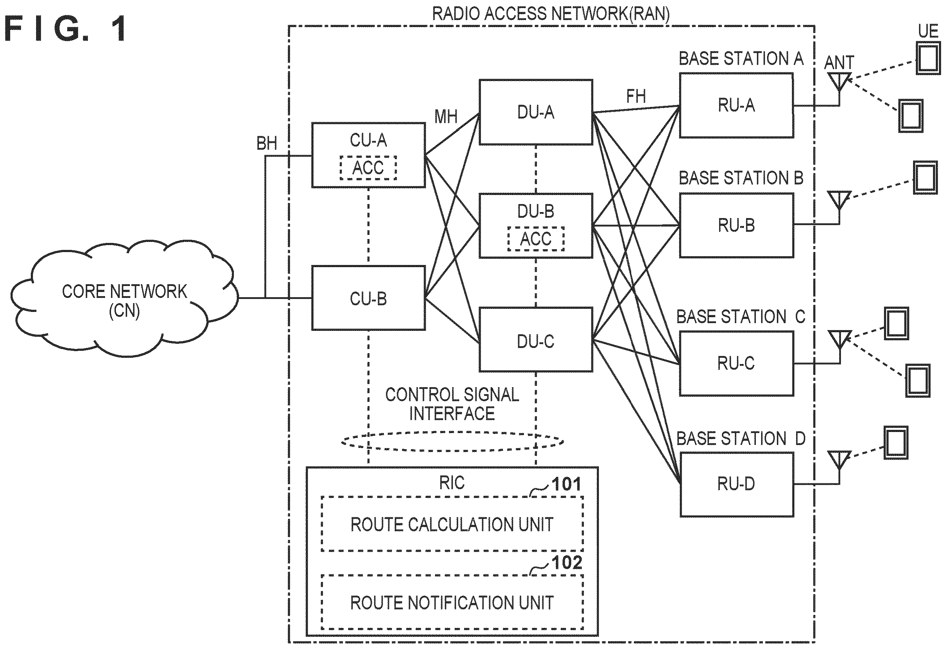

FIG. 1 is a functional block diagram showing a main part configuration of a radio access network (RAN) to which the present invention is applied, and configurations that are not necessary for explaining the present invention is omitted here.

In the present embodiment, each radio base station is configured by connecting respective units, which are a central unit (CU: CU-A, CU-B), a distributed unit (DU: DU-A, DU-B, DU-C) and a radio unit (RU: RU-A, RU-B, RU-C, RU-D), via predetermined routes. The interfaces between each CU, DU and RU are commonized and open, with specifications that comply with the O-RAN Alliance.

Each radio base station is a virtualized base station realized by virtualization technology that combines general-purpose computers (e.g., server apparatuses) with software. At least a part of the computers that realize the CU and DU has an FPGA or GPU implemented as an accelerator (ACC) that assists the CPU of the computers.

The CU of each virtualized base station is connected to a core network (CN) by a backhaul (BH). Each CU and each DU are connected in a mesh pattern via a midhaul (MH). Each DU and each RU are connected in a mesh pattern via a fronthaul (FH). Each RU is equipped with an antenna (ANT) and performs wireless communication with many user terminals (UEs).

Each CU and DU are connected to an RIC by a control signal interface. The control signal interface is used when each CU and DU transmit statistical information to the RIC and when the RIC transmits control information to each CU and DU. The RIC includes a route calculation unit 101 and a route notification unit 102.

The route calculation unit 101 calculates the optimal route between respective units based on the information of the ACC installed in the computers that virtualize the respective units (CU, DU) and the traffic information of the respective units. The route notification unit 102 notifies the respective units of the information on the calculated optimal route. The respective units switch the route between units based on route information notified from the RIC. The operations of the route calculation unit 101 and the route notification unit 102 are described in detail later.

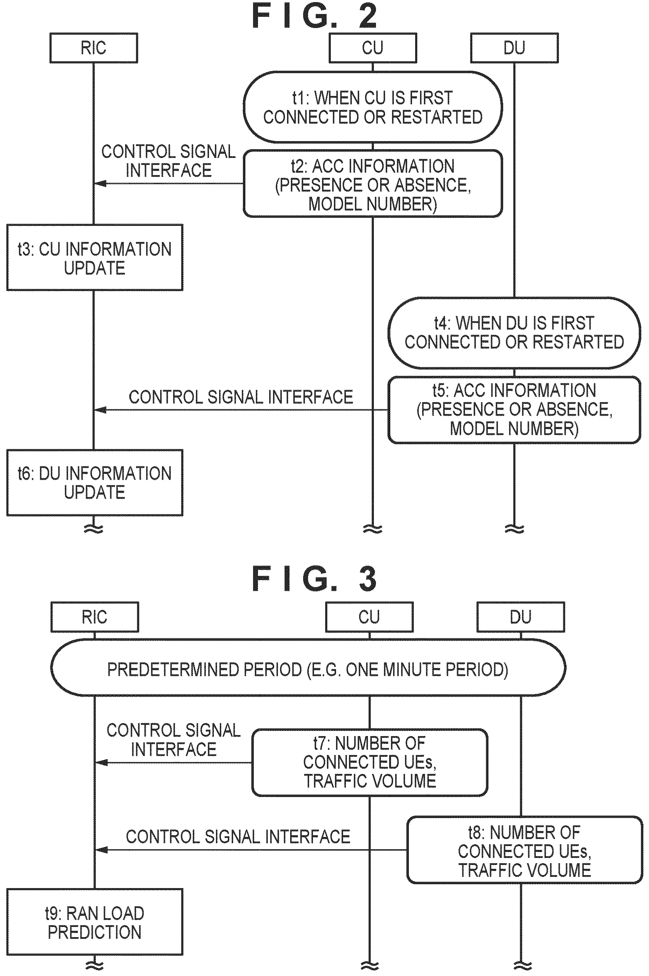

FIG. 2 is a sequence flow showing an initial registration procedure, in which each unit first registers its ACC information in the RIC, among procedures for distributing the traffic load of each virtualized base station by dynamically switching the routes between respective units of CU, DU, and RU.

At time t1, when a CU is connected to the RAN for the first time or is restarted, at time t2, the CU transmits, via the control signal interface, information indicating whether an ACC is installed on a computer that realizes the CU using virtualization technology, and if the ACC is installed, a capability index of the ACC, such as an ACC's model number and type, to the RIC as ACC information. At time t3, the RIC evaluates the capability of each CU based on the ACC information received from each CU, and registers/updates CU information.

Similarly, at time t4, when a DU is connected to the RAN for the first time or is restarted, at time t5, the DU transmits, via the control signal interface, information indicating whether an ACC is installed on a computer that realizes the DU using virtualization technology, and if the ACC is installed, a capability index of the ACC, such as an ACC's model number and type, to the RIC as ACC information. At time t6, the RIC evaluates the capability of each DU based on the ACC information received from each DU, and registers/updates DU information.

FIG. 3 is a sequence flow showing a traffic information notification procedure, in which respective units periodically notify the RIC of their current traffic information, among the procedures for distributing the traffic load of each virtualized base station by dynamically switching the routes between respective units.

When the RAN is operational and traffic control begins, each CU notifies the RIC of the number of UEs connected to its subordinate RUs and the traffic volume as traffic information via the control signal interface at time t7 (a predetermined period: for example, one minute period).

Similarly, each DU notifies the RIC of the number of UEs connected to its subordinate RUs and the traffic volume as traffic information via the control signal interface at time t8 (a predetermined period: for example, one minute period).

At time t9, the RIC repeatedly performs load prediction to determine whether there are signs of an increase in traffic in the RAN based on the traffic information of respective units notified by each CU and DU and the number of UEs connected to the DUs subordinate to respective units.

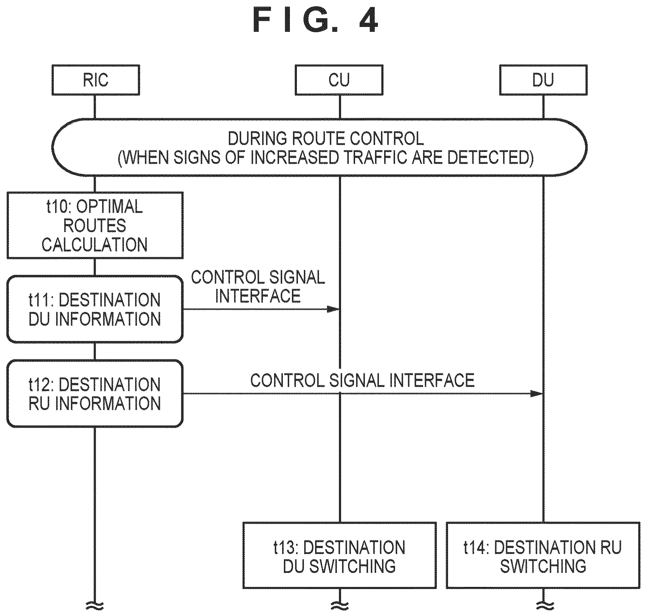

FIG. 4 is a sequence flow showing a route switching procedure, in which the RIC calculates the optimal route and instructs respective units to switch routes, among the procedures for distributing the traffic load of each virtualized base station by dynamically switching the routes between respective units.

When the RIC detects signs of increased traffic in the RAN through load prediction based on the traffic information periodically notified from each CU and DU, at time t10, it calculates optimal routes between each CU, DU, and RU based on the results of the load prediction and the ACC information of respective units so that the traffic processing load is distributed to each CU and DU.

In the present embodiment, the capability of a unit (CU, DU) virtualized by a computer in which an ACC is installed evaluated higher than the capability of a unit virtualized by a computer in which an ACC is not installed. Then, routes between each CU, DU, and RU are calculated so that CUs and DUs with higher capabilities are connected to RUs, which are connected with a larger number of UEs.

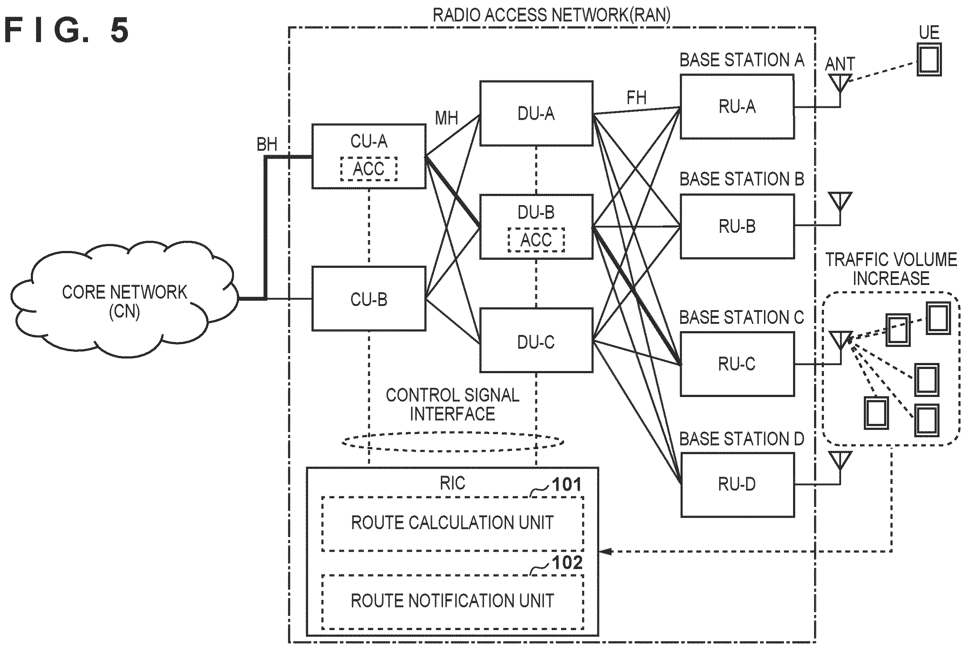

For example, as shown in FIG. 5, if signs of increased traffic is detected due to an increase in the number of UEs connected to the RU-C, and there is one DU (e.g., DU-B) virtualized on a computer in which an ACC is installed, a route connecting the DU-B to the RU-C is calculated. Furthermore, if there is one CU (CU-A) virtualized on a computer in which an ACC is installed, a route connecting the CU-A to the DU-B is calculated.

In addition, if the capability of the ACC can be evaluated in more detail based on its model number, the route may be optimized according to the capability of the ACC. For example, if there are two DUs (e.g., DU-A and DU-B) virtualized on computers in which ACCs are installed, and the capability of an ACC installed in a computer virtualizing DU-A is higher than the capability of an ACC installed in a computer virtualizing DU-B, a route is calculated to connect, among the top two RUs with the greatest number of connected UEs, one RU with the greatest number of connected UEs to the DU-A, and to connect the other to the DU-B.

When the route calculation is completed, at time t11, destination DU information that identifies the destination DU is notified from the RIC to each CU via the control interface. At time t12, destination RU information that identifies the destination RU is notified from the RIC to each DU via the control interface.

At time t13, each CU switches the destination DU to the DU identified in the destination DU information notified by the RIC, based on the destination DU information. At time t14, each DU switches the destination RU to the RU identified in the destination RU information notified by the RIC, based on the destination RU information.

According to the present invention, the capabilities of units virtualized by computers in which ACCs are installed among computers that virtualize radio base stations of the RAN are evaluated higher than the capabilities of the other units, and routes between respective units are switched so that the unit with higher capability can handle more traffic; thereby, efficient RAN operation is possible with minimal computational resources.

Furthermore, according to the above embodiment, it is possible to improve communication quality, such as wireless communication throughput and delay time, using minimal hardware resources, making it possible to provide a variety of communication and entertainment to many people, transcending geographical or economic disparities.

In addition, according to the present disclosure, there is provided a computer program that causes an apparatus having one or more processors to function as the above-mentioned RIC, and a computer program that causes an apparatus to execute the above-mentioned route switching method. Further provided is a non-transitory computer readable storage medium having the computer program stored thereon.

The present invention is not limited to the above embodiment and various changes and modifications can be made within the spirit and scope of the present invention. Therefore, to apprise the public of the scope of the present invention, the following claims are made.

This application claims priority from Japanese Patent Application No. 2023-013117 filed January 31, 2023, which is hereby incorporated by reference herein in its entirety.

## Claims

1. A wireless communication system, in which virtualized base stations are controlled by a RAN controller, each of the virtualized base stations is configured by connecting a central unit (CU), a distributed unit (DU) and a radio unit (RU) via a predetermined route, and interfaces between respective units are open,
wherein
an accelerator is installed in at least a part of computers virtualizing the respective units, and
the respective units notify the RAN controller of information of an accelerator installed in a computer that virtualizes the respective units and traffic information, and
wherein the RAN controller includes:
means for calculating a route connecting the respective units based on the information of the accelerator and the traffic information notified from the respective units, and
means for notifying the respective units of information of the route, and
wherein the respective units switch routes based on the notified information of the route.

2. The wireless communication system according to claim 1, wherein
the RAN controller further comprises means for predicting a load of a RAN based on the traffic information notified from the respective units, and
the means for calculating the route calculates the route based on the predicted load of the RAN and the information of the accelerator.

3. The wireless communication system according to claim 1 or 2, wherein
the traffic information is at least one of a number of user terminals connected to RUs subordinate of the respective units or traffic volume.

4. The wireless communication system according to any one of claims 1 to 3, wherein
the information of the accelerator includes information on presence or absence of the accelerator, and
the means for calculating the route evaluates capability of a unit virtualized by a computer in which the accelerator is installed higher than capability of a unit virtualized by a computer in which the accelerator is not installed, and calculates the route in which the unit with higher capability bears more traffic.

5. The wireless communication system according to claim 4, wherein
the information of the accelerator includes information that is an index of capability of the accelerator, and
the means for calculating the route evaluates the capability of the unit virtualized by the computer in which the accelerator with higher capability is installed more highly, and calculates the route in which the unit with higher capability bears more traffic.

6. A route switching method for a wireless communication system, in which virtualized base stations are controlled by a RAN controller, each of the virtualized base stations is configured by connecting a session unit (CU), a distributed unit (DU) and a radio unit (RU) via a predetermined route, and interfaces between respective units are open,
wherein an accelerator is installed in at least a part of computers virtualizing the respective units, and the respective units notify the RAN controller of information of the accelerator installed in a computer that virtualizes the respective units and traffic information, and
wherein the RAN controller calculates a route connecting the respective units based on the information of the accelerator and traffic information notified from the respective units, and notifies the respective units of information of the route, and
wherein the respective units switch routes based on the notified information of the route.

7. The route switching method for the wireless communication system according to claim 6, wherein
the information of the accelerator includes information on presence or absence of the accelerator, and
the method includes evaluating capability of a unit virtualized by a computer in which the accelerator is installed higher than capability of a unit virtualized by a computer in which the accelerator is not installed, and calculating the route in which the unit with higher capability bears more traffic.

8. The route switching method for the wireless communication system according to claim 7, wherein
the information of the accelerator includes information that is an index of capability of the accelerator, and
the method includes evaluating the capability of the unit virtualized by the computer in which the accelerator with higher capability installed more highly, and calculating the route in which the unit with higher capability bears more traffic.

9. A computer readable storage medium storing a computer program that, when executed by one or more processors of an apparatus having the one or more processors, causes the one or more processors to perform route switching method according to any one of claims 6 to 8.
